# FASCICULE DE BREVET EUROPEEN

(11) **EP 2 488 839 B1**
(45) Date de publication et mention de la délivrance du brevet: **15.04.2015**
(21) Numéro de dépôt: 10769030.7
(22) Date de dépôt: 27.09.2010
(51) Int. Cl.: G01H 17/00

(54) **PROCEDE DE SURVEILLANCE, DE PREDICTION ET DE REDUCTION DU NIVEAU D'ENERGIE ACOUSTIQUE D'UNE PLURALITE DE SOURCES EN MILIEU AQUATIQUE, ET PROCEDE DE SURVEILLANCE, DE PREDICTION ET DE REDUCTION DU RISQUE DE NUISANCE SONORE POUR LES ESPECES MARINES**
VERFAHREN ZUR ÜBERWACHUNG, VORHERSAGE UND VERRINGERUNG DER SCHALLENERGIEPEGELS MEHRERER QUELLEN IN GEWÄSSERN SOWIE VERFAHREN ZUR ÜBERWACHUNG, VORHERSAGE UND VERRINGERUNG DES RISIKOS VON LÄRMBELÄSTIGUNG FÜR WASSERTIERE
METHOD FOR MONITORING, PREDICTING, AND REDUCING THE LEVEL OF ACOUSTIC ENERGY OF A PLURALITY OF SOURCES IN AN AQUATIC ENVIRONMENT, AND METHOD FOR MONITORING, PREDICTING, AND REDUCING THE RISK OF NOISE ANNOYANCE FOR MARINE SPECIES

(30) Priorité: 14.10.2009 FR 0904933
(43) Date de publication de la demande: 22.08.2012
(73) Titulaire: Folegot, Thomas, 29480 Le Relecq Kerhuon (FR)
(72) Inventeur: Folegot, Thomas, 29480 Le Relecq Kerhuon (FR)
(74) Mandataire: Hamann, Jean-Christophe
(86) Numéro de dépôt international: PCT/FR2010/052017
(87) Numéro de publication internationale: WO 2011/045499

(56) Documents cités:
- WAGSTAFF R A: "An Ambient Noise Model for the Northeast Pacific Ocean Basin", IEEE JOURNAL OF OCEANIC ENGINEERING, IEEE SERVICE CENTER, PISCATAWAY, NJ, US LNKD- DOI:10.1109/JOE.2004.836993, vol. 30a, no. 2, 1 avril 2005 (2005-04-01) , pages 286-294, XP011141596, ISSN: 0364-9059
- ERBE CHRISTINE ET AL: "A software model to estimate zones of impact on marine mammals around anthropogenic noise", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US LNKD- DOI:10.1121/1.1288939, vol. 108, no. 3, 1 septembre 2000 (2000-09-01), pages 1327-1331, XP012001895, ISSN: 0001-4966
- PEDERSEN C B ET AL: "A model for predicting propagation of anthropogenic acoustic noise in the sea", OCEANS 2005 - EUROPE BREST, FRANCE 20-23 JUNE 2005, PISCATAWAY, NJ, USA,IEEE, US, vol. 1, 20 juin 2005 (2005-06-20), pages 293-298, XP010838501, ISBN: 978-0-7803-9103-1
- ARVESON PAUL T ET AL: "Radiated noise characteristics of a modern cargo ship", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US LNKD- DOI:10.1121/1.428344, vol. 107, no. 1, 1 janvier 2000 (2000-01-01), pages 118-129, XP012001413, ISSN: 0001-4966

## Description

La présente invention se rapporte aux procédés de surveillance du niveau acoustique d'une pluralité de sources émettrices de bruit en milieu aquatique.

Plus particulièrement, elle concerne un procédé de surveillance du niveau acoustique d'une pluralité de sources émettrices de bruit, tels que des navires, en milieu maritime.

Il est connu du document WAGSTRAFF, « An Ambient Noise Model for the Northeast Pacific Ocean Basin », vol 30a, n°2, 01-04-2005, pages 286-294, un procédé d'estimation du niveau acoustique en milieu océanique généré par une pluralité de navires.

Il est connu du document ERBE et FARMER, « A software model to estimate zones of impact on marine mammals around anthropogenic noise », The journal of the acoustical society of america american institute of physics for the acoustical society of America, vol.108,n°3, 01-09-2000, pages 1327-1331, l'estimation du niveau acoustique engendré par les émissions acoustiques sous-marines produites par un canon à air en fonction de la distance à la source et de la profondeur afin d'évaluer leur impact sur les populations de mammifères marins.

Il est connu de l'état de la technique des moyens permettant à un instant donné de mesurer le niveau sonore en un point donné en milieu aquatique. Ces moyens consistent en des transducteurs électroacoustiques, ou hydrophones, et de systèmes d'acquisition électronique, positionnés dans la mer, à partir desquels le bruit acoustique est évalué.

Toutefois les hydrophones offrent une mesure directe, ponctuelle et localisée à la position géographique de l'hydrophone. L'évaluation de la pollution sonore réalisée à partir des données mesurées par l'hydrophone offre donc une estimation locale peu précise qu'il est hasardeux d'extrapoler pour des espaces éloignés de ce dernier.

La présente invention vise à pallier cet inconvénient et à offrir une surveillance du niveau sonore réel en tout point d'un espace déterminé au cours du temps.

A cet effet l'invention propose un procédé caractérisé en ce qu'il comporte une étape de modélisation de la propagation acoustique de ladite source en temps réel, cette étape consistant à : obtenir, à partir d'une base de données, par l'intermédiaire de moyens récepteurs, des données concernant toutes informations instantanées relatives à la source, telles que la position instantanée et la nature de la source, lire, dans des bases de données établies, des données relatives au niveau sonore rayonné par ladite source, lire, dans des bases de données établies, des données relatives à un ou plusieurs paramètres caractérisant au moins une interface délimitant le milieu aquatique correspondant à l'espace déterminé, calculer la vitesse du son dans l'eau à partir de données océanographiques accessibles sur des bases de données de l'espace déterminé, calculer à partir d'un calculateur le niveau d'énergie acoustique rayonnée par l'au moins une source émettrice de bruit en tout point de l'espace et en temps réel, à partir des données précédemment réceptionnées, lues et calculées transmises au calculateur.

Grâce à ces dispositions, le procédé permet d'obtenir une estimation d'un niveau sonore, en temps réel et en tout point d'un espace déterminé, avec une précision améliorée par rapport aux procédés de l'art antérieur.

Selon d'autres caractéristiques :
- les informations relatives à la position de la source sont réceptionnées automatiquement par les moyens récepteurs depuis un système d'émission continue de messages contenant des informations caractéristiques des sources tels que l'AIS (Automated Identification System) ou LRIT (Long Range Identification Tracking) installé à bord de ladite source;
- les paramètres caractérisant au moins une interface du milieu aquatique sont des données de bathymétrie et/ou des données géologiques de l'espace déterminé ;
- le procédé comporte en outre, préalablement à l'étape de calcul de l'énergie acoustique propagée, une étape de calcul de perte de la propagation du son à la surface du milieu aquatique à partir de données météorologiques de l'espace concerné ;
- le procédé comporte les étapes suivantes : Mesure d'au moins un niveau d'énergie acoustique mesuré en temps réel en une position déterminée dans ledit espace, optimisation des niveaux d'énergie acoustique calculés à partir de l'au moins un niveau d'énergie acoustique mesuré, de sorte à réduire l'erreur entre le niveau d'énergie calculé selon l'une des revendications précédentes et le niveau d'énergie mesuré;
- le procédé consiste à : réaliser l'étape de modélisation de la propagation acoustique en temps réel, pour chacune des sources émettrices de bruit présentes dans l'espace déterminé, Calcul, pour l'espace déterminé, des niveaux d'énergie acoustique globale à partir de l'ensemble des modèles de propagation acoustique obtenus en temps réel pour chacune des sources.

L'invention concerne aussi un procédé de prédiction du niveau d'énergie acoustique globale en milieu aquatique, notamment en milieu océanique, maritime ou fluvial. Dans la suite de la description, on entend par milieu aquatique, l'eau en milieu naturel, par exemple les océans, les mers, les lacs et les fleuves. Le procédé de prédiction comporte les étapes suivantes: une étape de réception automatique et de lecture d'informations instantanées relatives au cap et à la vitesse d'au moins une source émettrice de bruit, une étape de calcul, à partir des informations lues à l'étape précédente, d'une position future à un instant déterminé de l'au moins une source, une étape de mise en oeuvre du procédé de surveillance pour la position future calculée de ladite source émettrice, de sorte à obtenir une image prédictive des niveaux d'énergie acoustique globale.

L'invention concerne aussi un procédé de réduction de la pollution sonore en milieu aquatique, notamment en milieu maritime, consistant à mettre en oeuvre le procédé de prédiction de sorte à obtenir une image prédictive des niveaux d'énergie acoustique globale à un instant déterminé, calculer, pour au moins une source, l'énergie rayonnée pour une combinaison de positions fictives possibles et détermination de la position fictive pour laquelle l'énergie acoustique globale est minimisée à l'instant déterminée, transmission du cap et de la vitesse à maintenir à ladite source émettrice pour atteindre la position fictive déterminée à l'instant déterminé.

L'invention concerne aussi un procédé de surveillance, de prédiction et de réduction du risque de nuisance sonore pour les espèces marines qui sera décrit plus en détail dans la suite de la description.

D'autres caractéristiques et avantages de l'invention apparaîtront au cours de la description suivante d'un de ses modes de réalisation, donné à titre d'exemple non limitatif, en regard des dessins joints dans lesquels :
- La figure 1 représente un diagramme d'un procédé de surveillance selon l'invention,
- La figure 2 illustre une carte de répartition du niveau maximum de l'énergie acoustique pour une zone déterminée et un instant donné,
- La figure 3 illustre, pour une zone identique et au même instant que celle de la figure 2, les profondeurs des niveaux sonores les plus élevées ;
- La figure 4 illustre les différentes données prises en compte pour mettre en oeuvre le procédé selon l'invention.

Les activités maritimes (trafic commercial, nautisme de loisir, sonar militaire, prospection sismique, etc...) sont génératrices de bruits par vibrations mécaniques qui se convertissent et rayonnent dans l'eau sous forme d'ondes sonores. Il s'agit des bruits d'hélices et de leurs cavitations, des vibrations des moteurs, des bruits de perforation de plateforme, des sonars sismiques d'exploration pétrolière, des sonars militaires, des bruits d'avions etc... Les activités citées précédemment sont en pleine croissance et les ondes acoustiques se propagent plus vite et bien plus loin dans l'eau que dans l'air, sur des distances comprises entre quelques kilomètres jusqu'à des centaines de kilomètres en fonction des conditions océanographiques et des fréquences sonores.

L'émission de bruit sous l'eau est considérée comme une pollution, au même titre que les pollutions d'hydrocarbures. Il est reconnu que la pollution sonore impacte directement la biodiversité marine, en particulier les mammifères marins et les tortues marines, espèces menacées d'extinction pour la plupart, mais aussi les poissons.

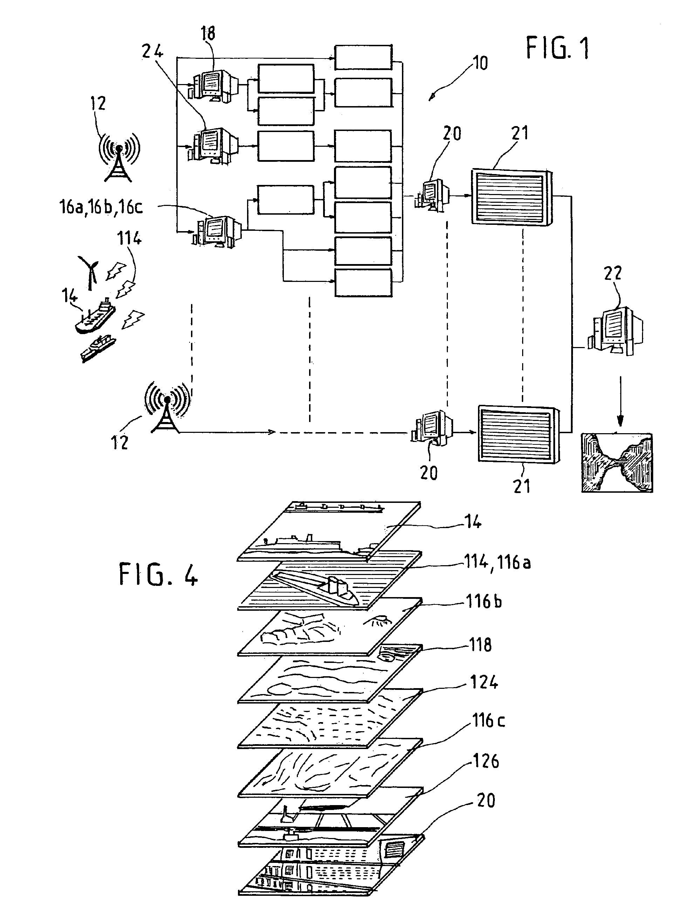

Afin d'évaluer au mieux le niveau sonore dans les océans, et ainsi de pouvoir mieux le contrôler, et de pouvoir le diminuer, la présente invention propose un procédé de surveillance du niveau acoustique permettant de modéliser la propagation acoustique de chacune des sources émettrices de bruit situées dans un espace déterminé au cours du temps. Le résultat obtenu peut être représenté par une image en deux dimensions visible sur la figure 1 annexée.

Ainsi la pollution sonore sous-marine, n'est plus mesurée localement de manière arbitraire selon la position du capteur, mais est déterminée directement pour chaque source, quelque soit sa position, ce qui offre un résultat plus fiable et permet de prendre en compte l'ensemble des sources émettrices de bruit, qui peuvent être en mouvement ou bien immobile pendant une durée déterminée.

Le procédé de surveillance selon l'invention est mis en oeuvre par un système 10 illustré à la figure 1. La modélisation de la propagation acoustique en temps réel est obtenue de la manière suivante.

Le système 10 permettant de mettre en oeuvre le procédé selon l'invention permet d'obtenir, à partir d'une base de données régulièrement mise à jour, des données relatives à la position instantanée d'au moins une source 14 émettrice de bruit. Selon un mode de réalisation particulier, le système comporte des moyens récepteurs 12 adaptés à recevoir automatiquement et à lire des données relatives à la position instantanée, c'est-à-dire la position en temps réel, d'au moins une source émettrice 14 de bruit située dans ledit espace. La position est définie par les coordonnées de latitude, de longitude et de profondeur de la source.

Cette étape est mise en oeuvre notamment grâce au système de surveillance maritime basé sur l'installation AIS (Automated Identification System - système d'identification automatique) ou le LRIT (Long Range Identification Tracking - traçage d'identification à longue distance) mis en place à bord des navires. L'AIS et le LRIT sont des systèmes d'émission continue de messages radio contenant des informations caractéristiques des navires, en temps réel. Un réseau de stations réceptrices à terre ou de récepteurs satellites permettent de recueillir à chaque instant ces informations. Ainsi ces informations peuvent être retransmises à un ordinateur distant qui pourra les utiliser pour déterminer notamment la position de chaque navire équipés de l'AIS ou LRIT.

L'AIS ou le LRIT permet de retransmettre des informations 114 datées et instantanées relatives notamment à la latitude, la longitude, la vitesse, le cap, la provenance, la destination, et relatives à la nature de la source telles que le type de navire et le niveau de chargement.

Il est ainsi possible d'en extraire, en temps réel, la position exacte du navire 14 pour lequel on souhaite établir le rayonnement du bruit qu'il génère dans l'océan.

De plus grâce aux informations portant sur la vitesse et le chargement et sur le type de navires 14, il est alors possible d'estimer, par l'intermédiaire de bases de données 16a préétablies, connues de l'homme de l'art, le niveau sonore émis par le navire.

Ensuite, le procédé selon l'invention consiste à déterminer pour l'espace dans lequel se trouve ladite source 14, des données relatives à un ou plusieurs paramètres caractérisant au moins une interface du milieu aquatique dans l'espace déterminé.

Ces paramètres sont, par exemple, des informations de bathymétrie 116b de l'espace maritime concerné, de sorte à obtenir les informations relatives aux profondeurs marines dudit espace. Les informations de bathymétrie sont accessibles sur des bases de données 16b mondiales, telles que la base de données ETOPO de la « National Oceanic and Atmospheric Administration - NOAA ».

Ces paramètres sont aussi, notamment, des informations relatives à la nature des fonds sous-marin, à partir desquelles il est possible de déterminer des données géo-acoustiques 116c du fond marin, notamment la densité et l'absorption acoustique. Ces informations sont accessibles sur des bases de données mondiales 16c.

Ces paramètres sont aussi notamment des informations océanographiques 118 relatives aux caractéristiques de l'eau (océan, mer, fleuves, lacs...) dans un espace environnant un navire ou une source de bruit, telles que la température de l'eau et la salinité. Ces informations sont alors utilisées pour déterminer la vitesse du son dans l'eau. Ces informations sont basées sur des statistiques annuelles ou bien sont mesurées à intervalles réguliers par la réception automatique des données issues des systèmes de prédictions océanographiques et sont accessibles sur des bases de données 18 mondiales type « mercator ». Dans ce dernier cas le procédé prend en compte les dernières informations océanographiques disponibles, c'est-à-dire les dernières données mises à jour, concernant l'espace déterminé. Sont connus de l'homme du métier, les formules permettant de déterminer la vitesse du son dans l'eau en tout point d'un espace donné à partir des paramètres d'océanographie physique, tels que la température et la salinité. Par exemple, le calcul de la vitesse du son a partir de la température et de la salinité et de la pression peut être calculé selon la méthode énoncée dans la référence: Fofonoff, P. and Millard, R.C. Jr, Unesco 1983, « Algorithms for computation of fundamental properties of seawater, 1983 » - Unesco Tech. Pap. in Mar. Sci._, No. 44, 53 pp, et pat des méthodes d'interpolation: interpolation linéaire, cubique, spline, ou par modèle de structure.

Cette référence est donnée à titre d'exemple et est non limitative.

Le bruit produit par un navire se propage sur des distances très importantes, en fonction de la fréquence acoustique de l'onde sonore, dans les trois dimensions de l'espace, et peut se réfléchir sur le fond et la surface des océans, et est réfracté dans des « canaux » de propagation sous-marins en fonction des conditions océanographiques locales.

C'est pourquoi l'énergie acoustique rayonnée depuis la position du navire, ou de la source émettrice de bruit en tout point de l'espace et à un instant t est alors calculée à partir des données citées ci-dessus.

Ce calcul peut être réalisé à partir de simulateur de propagation 20 acoustique connus de l'homme de l'art, notamment Bellhop. Les résultats de la modélisation de la propagation acoustique en temps réel de chaque source peuvent être représentés sous la forme d'une image en trois dimensions représentant le niveau d'énergie acoustique propagé en chaque point de l'espace.

Il est alors possible d'en extraire une carte en deux dimensions 21 du niveau d'énergie acoustique propagé, telle que visible sur la figure 1.

A partir des résultats calculés précédemment, il est possible de calculer et de suivre l'évolution spatiale et temporelle de la pollution sonore globale issue de l'accumulation collective des énergies sonores propagées par un grand nombre de navires sur de longues distances et de grandes profondeurs. A cet effet, les moyens de calcul permettant de calculer le niveau d'énergie acoustique propagée sont reliés à un moyen de combinaison permettant d'établir à partir de l'ensemble des énergies acoustiques calculées pour chacune des sources un niveau d'énergie acoustique globale pour chaque point de l'espace tridimensionnel étudié. Les niveaux d'énergie acoustique globale peuvent être représentés par une image en trois dimensions.

Le résultat est obtenu sous la forme d'une image formant une représentation en trois dimensions, dans l'espace déterminé, du niveau d'énergie acoustique global pour chaque point de l'espace, chaque niveau d'énergie acoustique global étant associé à une couleur déterminée et chaque point de l'espace étant associé à des coordonnées de longitude, latitude et profondeur qui lui sont propres.

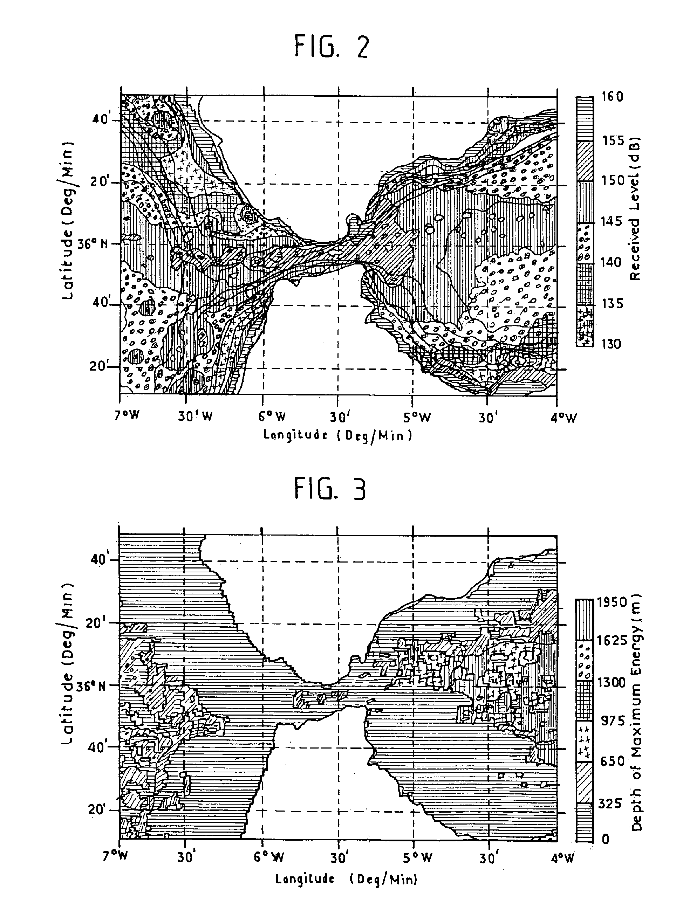

Il est alors possible d'en sortir, à partir de moyens connus de l'homme du métier, une carte en deux dimensions représentant par exemple les niveaux maximum d'énergie acoustique globale (en dB) pour chaque coordonnée définie par une latitude et une longitude, illustrée à la figure 2.

La figure 3 illustre une autre possibilité de représentation des résultats obtenus à partir du procédé de surveillance selon l'invention. En particulier, la figure 3 représente pour une zone identique à celle de la figure 2, les différentes profondeurs des niveaux sonores les plus élevés. Ces résultats peuvent être corrélés avec la présence d'espèces marines aux profondeurs illustrés, comme cela sera décrit dans la suite de la description.

Selon une variante de l'invention, le calcul de l'énergie acoustique prend en compte la réflexion de l'onde sonore sur la surface du milieu aquatique. A cet effet il est réalisé, préalablement au calcul de l'énergie acoustique, une étape de calcul des pertes de propagation du son à la surface du milieu aquatique à partir de données météorologiques 124 accessibles dans des bases de données 24, et basées sur des statistiques ou mesurées à intervalles réguliers. Grâce à ces dispositions, le calcul de l'énergie acoustique est affiné par rapport à l'état de la surface du milieu aquatique. Si cette dernière est plane, la propagation du son sera meilleure que si cette dernière est rugueuse.

Selon une autre variante de réalisation, le calcul des niveaux d'énergie acoustique 126 de chaque source prend en compte la réception d'au moins une mesure de l'énergie acoustique en temps réel en une position déterminée dans ledit espace par un transducteur électroacoustique ou tout autre système de mesure. Il est ainsi possible d'optimiser les niveaux d'énergie acoustique à partir du niveau d'énergie acoustique réel mesurée par un transducteur de sorte à réduire l'erreur entre le niveau d'énergie calculée et le niveau d'énergie mesurée. Ce calcul est réalisé par une méthode d'assimilation de données connue de l'homme du métier.

Le procédé selon l'invention permet aussi de prédire le niveau sonore, et par conséquent la pollution sonore, dans le milieu maritime étudié. A cet effet le procédé comporte les étapes de réception et de lecture d'informations relatives au cap et à la vitesse d'au moins une source émettrice de bruit, de sorte à extrapoler la position future de ladite source à partir des informations reçues des systèmes de réception des données AIS. Puis le procédé consiste à calculer, à partir des informations reçues et lues à l'étape précédente, pour ladite source, une position future à un instant déterminé. Enfin le procédé consiste à mettre en oeuvre le calcul du niveau d'énergie acoustique rayonnant depuis chaque position future calculée de la source émettrice, et d'en déterminer des niveaux prédictifs d'énergie acoustique globale illustrée par une image en trois dimensions.

Le procédé selon l'invention permet aussi de réduire la pollution sonore en milieu aquatique à partir de l'image prédictive des niveaux acoustiques énoncés ci-dessus. A cet effet le procédé de réduction de la pollution sonore comporte les étapes de calcul pour au moins une source, de l'énergie rayonnée pour une combinaison de positions fictives possibles et une étape de détermination de la position fictive pour laquelle l'énergie acoustique globale est minimisée à l'instant déterminé. Puis le procédé consiste à transmettre le cap et la vitesse à maintenir, par des moyens de communication adaptés du type satellite, radio ou téléphone, à ladite source émettrice pour atteindre la position fictive déterminée à l'instant déterminé, de sorte à optimiser la position des navires dans un futur proche et de diminuer la pollution sonore.

Selon un autre mode de réalisation, l'invention concerne un procédé de surveillance, de prédiction et de réduction du risque de nuisance sonore pour les espèces marines présentes dans l'espace déterminé.

A cet effet pour chaque instant et pour chaque position géographique et pour chaque profondeur, le niveau d'énergie acoustique globale est représenté sur une échelle de valeur, par exemple entre 0 et 1. Cette valeur est alors multipliée par la probabilité de présence des espèces marines, ce qui permet de donner une mesure du risque de nuisance des activités maritimes sur les espèces marines considérées. On obtient ainsi une cartographie en trois dimensions des risques de nuisances en temps réel et pour tout point de l'océan.

A partir du procédé de prédiction décrit précédemment, il est alors possible d'en déduire une prédiction du risque de nuisance sonore pour les espèces marines. A cet effet on obtient une image prédictive des niveaux d'énergie acoustique globale, puis on détermine pour chaque profondeur de l'espace déterminé d'une probabilité de présence des espèces marines, et calcule à partir des données précédemment obtenues, un risque de nuisance sonore prédictif pour chaque profondeur de l'espace déterminé, à instant déterminé.

Enfin, à partir de l'image prédictive des risques de nuisance sonores prédictifs obtenue précédemment, il est possible de mettre en oeuvre un procédé de réduction du risque de nuisance sonore pour les espèces marines. A cet effet on calcule, pour au moins une source, le risque de nuisance sonore pour une combinaison de positions fictives possibles, puis on détermine la position fictive pour laquelle le risque de nuisance sonore est minimisé à l'instant déterminé, et on transmet le cap et la vitesse à maintenir à ladite source émettrice pour atteindre la position fictive déterminée à l'instant déterminé.

La présente invention n'est nullement limitée aux modes de réalisation décrits et illustrés ci-dessus qui n'ont été donnés qu'à titre d'exemple pour le milieu aquatique. Elle pourrait aussi bien s'appliquer aux milieux fluviaux ou aux lacs.

## Revendications

1. Procédé de surveillance du niveau acoustique d'une pluralité de sources (14) situées dans un espace déterminé, la pluralité de sources comprenant au moins une source émettrice de bruit, en milieu océanique, par exemple un navire, **caractérisé en ce qu'**il comporte une étape de modélisation de la propagation acoustique de ladite source en temps réel, cette étape consistant à :
- Obtenir, à partir d'une base de données, par l'intermédiaire de moyens récepteurs (12), des données (114) concernant toutes informations instantanées relatives à la source, comprenant la position instantanée et la nature de la source émettrice de bruit,
- Lire dans des bases de données établies (16a) des données (116a) relatives au niveau sonore rayonné par ladite source,
- Lire dans des bases de données établies (16b, 16c) des données (116b, 116c) relatives à un ou plusieurs paramètres caractérisant au moins une interface délimitant le milieu océanique correspondant à l'espace déterminé,
- calculer la vitesse du son dans l'eau à partir de données océanographiques (118) accessibles sur des bases de données (18) de l'espace déterminé,
- calculer à partir d'un calculateur (20) le niveau d'énergie acoustique rayonnée par l'au moins une source (14) émettrice de bruit en tout point de l'espace et en temps réel, à partir des données précédemment réceptionnées, lues et calculées transmises au calculateur (20).

2. Procédé de surveillance selon la revendication 1, dans lequel les données (114) relatives à la position de la source sont réceptionnées automatiquement par les moyens récepteurs (12) depuis un système d'émission continue de messages contenant des informations caractéristiques des sources tels que l'AIS ou LRIT installé à bord de ladite source.

3. Procédé de surveillance selon l'une des revendications précédentes, dans lequel les paramètres caractérisant au moins une interface du milieu aquatique sont des données de bathymétrie (116b) et/ou des données géologiques (116c) de l'espace déterminé.

4. Procédé de surveillance selon l'une des revendications précédentes, comportant en outre, préalablement à l'étape de calcul de l'énergie acoustique propagée, une étape de calcul de perte de la propagation du son à la surface du milieu aquatique à partir de données météorologiques (124) de l'espace concerné.

5. Procédé de surveillance selon l'une des revendications précédentes, **caractérisé en ce qu'**il comporte également les étapes suivantes :
- Mesure d'au moins un niveau d'énergie acoustique mesuré (126) en temps réel en une position déterminée dans ledit espace,
- Optimisation des niveaux d'énergie acoustique calculés à partir de l'au moins un niveau d'énergie acoustique mesuré, de sorte à réduire l'erreur entre le niveau d'énergie calculé selon l'une des revendications précédentes et le niveau d'énergie mesuré.

6. Procédé de surveillance du niveau acoustique d'une pluralité de sources selon l'une des revendications précédentes, **caractérisé en ce qu'**il consiste à :
- Réaliser l'étape de modélisation de la propagation acoustique en temps réel, pour chacune des sources émettrices (14) de bruit présentes dans l'espace déterminée,
- Calcul, pour l'espace déterminé, des niveaux d'énergie acoustique globale à partir de l'ensemble des modèles de propagation acoustique obtenus en temps réel pour chacune des sources.

7. Procédé de prédiction du niveau d'énergie acoustique globale en milieu aquatique, **caractérisé en ce qu'**il comporte les étapes suivantes:
- une étape de réception automatique et de lecture d'informations instantanées relatives au cap et à la vitesse d'au moins une source émettrice de bruit,
- une étape de calcul, à partir des informations lues à l'étape précédente, d'une position future de ladite source à un instant déterminé,
- une étape de mise en oeuvre du procédé de surveillance selon la revendication 6 pour la position future calculée de ladite source émettrice, de sorte à obtenir une image prédictive des niveaux d'énergie acoustique globale.

8. Procédé de réduction de la pollution sonore en milieu aquatique, notamment en milieu maritime, **caractérisé en ce qu'**il consiste à
- mettre en oeuvre le procédé de prédiction selon la revendication précédente de sorte à obtenir une image prédictive des niveaux d'énergie acoustique globale à un instant déterminé,
- calculer, pour au moins une source, l'énergie rayonnée pour une combinaison de positions fictives possibles et détermination de la position fictive pour laquelle l'énergie acoustique globale est minimisée à l'instant déterminé
- transmission du cap et de la vitesse à maintenir à l'au moins une source émettrice pour atteindre la position fictive déterminée à l'instant déterminé.

9. Procédé de surveillance du risque de nuisance sonore pour les espèces marines, **caractérisé en ce qu'**il comporte les étapes suivantes :
- mise en oeuvre du procédé de surveillance selon la revendication 6 pour l'ensemble des sources émettrices de bruit dans l'espace déterminé de sorte à obtenir une image des niveaux d'énergie acoustique globale, en temps réel,
- détermination pour chaque profondeur de la zone déterminée d'une probabilité de présence des espèces marines,
- calcul d'un risque de nuisance sonore pour chaque profondeur de la zone déterminée.

10. Procédé de prédiction du risque de nuisance sonore pour les espèces marines **caractérisé en ce qu'**il comporte les étapes suivantes :
Mise en oeuvre du procédé de prédiction selon la revendication 7 de sorte à obtenir une image prédictive des niveaux d'énergie acoustique globale,
- détermination pour chaque profondeur de l'espace déterminé d'une probabilité de présence des espèces marines,
- calcul d'un risque de nuisance sonore prédictif pour chaque profondeur de l'espace déterminé, à l'instant déterminé.

11. Procédé de réduction du risque de nuisance sonore pour les espèces marines, **caractérisé en ce qu'**il comporte les étapes suivantes :
- Mise en oeuvre du procédé de prédiction selon la revendication 10 de sorte à obtenir une image prédictive des risques de nuisance sonores prédictifs pour chaque profondeur à un instant déterminé,
- Calculer pour au moins une source le risque de nuisance sonore pour une combinaison de positions fictives possibles,
- Détermination de la position fictive pour laquelle le risque de nuisance sonore est minimisé à l'instant déterminé,
- transmission du cap et de la vitesse à maintenir à ladite source émettrice pour atteindre la position fictive déterminée à l'instant déterminé.

## Patentansprüche

1. Verfahren zur Überwachung des Schallpegels einer Vielzahl von Quellen (14), die sich in einem bestimmten Raum befinden, wobei die Vielzahl von Quellen mindestens eine Lärmemissionsquelle in einer Meeresumgebung enthält, zum Beispiel ein Schiff, **dadurch gekennzeichnet, dass** es einen Schritt der Modellbildung der Schallausbreitung der Quelle in Echtzeit aufweist, wobei dieser Schritt darin besteht:
- ausgehend von einer Datenbank mittels Empfangseinrichtungen (12) Daten (114) zu erhalten, die alle Augenblicksinformationen bezüglich der Quelle betreffen, die die Augenblicksposition und die Art der Lärmemissionsquelle enthalten,
- in eingerichteten Datenbanken (16a) Daten (116a) bezüglich des von der Quelle ausgestrahlten Lärmpegels auszulesen,
- in eingerichteten Datenbanken (16b, 16c) Daten (116b, 116c) bezüglich eines oder mehrerer Parameter auszulesen, die mindestens eine Schnittstelle kennzeichnen, die die dem bestimmten Raum entsprechende Meeresumgebung begrenzt,
- die Schallgeschwindigkeit im Wasser ausgehend von Meeresdaten (118) zu berechnen, die in Datenbanken (18) des bestimmten Raums zugänglich sind,
- ausgehend von einem Rechner (20) den von der mindestens einer Lärmemissionsquelle (14) ausgestrahlten Schallenergiepegel an jedem Punkt des Raums und in Echtzeit ausgehend von vorher empfangenen, ausgelesenen und berechneten Daten zu berechnen, die an den Rechner (20) übertragen werden.

2. Überwachungsverfahren nach Anspruch 1, wobei die Daten (114) bezüglich der Position der Quelle automatisch von den Empfangseinrichtungen (12) ausgehend von einem System zur kontinuierlichen Emission von Mitteilungen empfangen werden, die kennzeichnende Informationen der Quellen, wie AIS oder LRIT, enthalten, die an Bord der Quelle installiert sind.

3. Überwachungsverfahren nach einem der vorhergehenden Ansprüche, wobei die mindestens eine Schnittstelle des Gewässers kennzeichnenden Parameter Tiefseemessungsdaten (116b) und/oder geologische Daten (116c) des bestimmten Raums sind.

4. Überwachungsverfahren nach einem der vorhergehenden Ansprüche, das außerdem vor dem Schritt der Berechnung der ausgebreiteten Schallenergie einen Schritt der Berechnung des Schallausabreitungsverlusts an der Oberfläche des Gewässers ausgehend von meteorologischen Daten (124) des betroffenen Raums aufweist.

5. Überwachungsverfahren nach einem der vorhergehenden Ansprüche, **dadurch gekennzeichnet, dass** es ebenfalls die folgenden Schritte aufweist:
- Messen mindestens eines Schallenergiepegels (126), der in Echtzeit an einer bestimmten Position im Raum gemessen wird,
- Optimierung der berechneten Schallenergiepegel ausgehend von dem mindestens einen gemessenen Schallenergiepegel, um den Fehler zwischen dem nach einem der vorhergehenden Ansprüche berechneten Energiepegel und dem gemessenen Energiepegel zu reduzieren.

6. Verfahren zur Überwachung des Schallpegels einer Vielzahl von Quellen nach einem der vorhergehenden Ansprüche, **dadurch gekennzeichnet, dass** es darin besteht:
- den Schritt der Modellbildung der Schallausbreitung in Echtzeit für jede der im bestimmten Raum vorhandenen Lärmemissionsquellen (14) durchzuführen,
- für den bestimmten Raum globale Schallenergiepegel ausgehend von der Gesamtheit der Schallausbreitungsmodelle zu berechnen, die in Echtzeit für jede der Quellen erhalten werden.

7. Verfahren zur Vorhersage des globalen Schallenergiepegels in einem Gewässer, **dadurch gekennzeichnet, dass** es die folgenden Schritte aufweist:
- einen Schritt des automatischen Empfangs und des Auslesens von Augenblicksinformationen betreffend den Kurs und die Geschwindigkeit mindestens einer Lärmemissionsquelle,
- einen Schritt der Berechnung, ausgehend von den im vorhergehenden Schritt ausgelesenen Informationen, einer zukünftigen Position der Quelle zu einem bestimmten Zeitpunkt,
- einen Schritt der Durchführung des Überwachungsverfahrens nach Anspruch 6 für die berechnete zukünftige Position der Emissionsquelle, um ein prädiktives Bild der globalen Schallenergiepegel zu erhalten.

8. Verfahren zur Reduzierung der Lärmbelästigung in Gewässern, insbesondere in einer Meeresumgebung, **dadurch gekennzeichnet, dass** es darin besteht
- das Vorhersageverfahren gemäß dem vorhergehenden Anspruch durchzuführen, um ein prädiktives Bild der globalen Schallenergiepegel zu einem bestimmten Zeitpunkt zu erhalten,
- für mindestens eine Quelle die ausgestrahlte Energie für eine Kombination möglicher fiktiver Positionen zu berechnen und die fiktive Position zu bestimmen, für die die globale Schallenergie zum bestimmten Zeitpunkt minimiert ist,
- den Kurs und die aufrechtzuerhaltende Geschwindigkeit an die mindestens eine Emissionsquelle zu übertragen, um die bestimmte fiktive Position zum bestimmten Zeitpunkt zu erreichen.

9. Verfahren zur Überwachung der Gefahr der Schallbelästigung für die Meereslebewesen, **dadurch gekennzeichnet, dass** es die folgenden Schritte aufweist:
- Durchführung des Überwachungsverfahrens nach Anspruch 6 für alle Lärmemissionsquellen im bestimmten Raum, um ein Bild der globalen Schallenergiepegel in Echtzeit zu erhalten,
- Bestimmung für jede Tiefe der bestimmten Zone einer Anwesenheitswahrscheinlichkeit der Meereslebewesen,
- Berechnung einer Gefahr der Lärmbelästigung für jede Tiefe der bestimmten Zone.

10. Verfahren zur Vorhersage der Gefahr einer Lärmbelästigung für die Meereslebewesen, **dadurch gekennzeichnet, dass** es die folgenden Schritte aufweist:
- Durchführung des Vorhersageverfahrens nach Anspruch 7, um ein prädiktives Bild der globalen Schallenergiepegel zu erhalten,
- Bestimmung für jede Tiefe des bestimmten Raums einer Anwesenheitswahrscheinlichkeit der Meereslebewesen,
- Berechnung einer prädiktiven Gefahr einer Lärmbelästigung für jede Tiefe des bestimmten Raums zum bestimmten Zeitpunkt.

11. Verfahren zur Reduzierung der Gefahr einer Lärmbelästigung für die Meereslebewesen, **dadurch gekennzeichnet, dass** es die folgenden Schritte aufweist:
- Durchführung des Vorhersageverfahrens nach Anspruch 10, um ein prädiktives Bild der prädiktiven Gefahren einer Lärmbelästigung für jede Tiefe zu einem bestimmten Zeitpunkt zu erhalten,
- Berechnung für mindestens eine Quelle der Gefahr einer Lärmbelästigung für eine Kombination von möglichen fiktiven Positionen,
- Bestimmung der fiktiven Position, für die die Gefahr der Lärmbelästigung zum bestimmten Zeitpunkt minimiert ist,
- Übertragung des Kurses und der aufrechtzuerhaltenden Geschwindigkeit an die Emissionsquelle, um die bestimmte fiktive Position zum bestimmten Zeitpunkt zu erreichen.

## Claims

1. Method for monitoring the acoustic level of a plurality of sources (14) located in a defined space, the plurality of sources comprising at least one sound-emitting source, in a marine environment, for example a ship, **characterised in that** it comprises a stage of modelling the acoustic propagation of the said source in real time, said stage consisting of:
- obtaining from a database, by means of receivers (12), data (114) concerning all of the instantaneous information relating to the source, comprising the instantaneous position and the nature of the noise-emitting source,
- reading from the established databases (16a) data relating to the level of sound radiated by said source,
- reading from the established database (16b, 16c) data (116b, 116c) relating to one or more parameters characterising at least one interface delimiting the marine environment in the defined space,
- calculating the speed of sound in the water from oceanographic data (118) accessible in the databases (18) of the defined space,
- calculating with a calculator (20) the level of acoustic energy radiated by at least one sound-emitting source (14) in any point in space and in real time, from previously received, read and calculated data transmitted to the calculator (20).

2. Monitoring method according to claim 1, wherein the data (114) relating to the position of the source are received automatically by receiving means (12) from a system for the continuous emission of messages containing information characteristic of the sources such as AIS or LRIT installed on board said source.

3. Monitoring method according to any one of the preceding claims, wherein the parameters characterising at least one interface of the aquatic environment are bathymetric data (116b) and/or geological data (116c) of the defined space.

4. Monitoring method according to any one of the preceding claims, further comprising, prior to the stage of calculating the propagated acoustic energy, a stage for calculating the loss of the propagation of sound to the surface of the aquatic environment from meteorological data (124) on the space concerned.

5. Monitoring method according to any one of the preceding claims **characterised in that** it also comprises the following stages:
- measuring at least one level of acoustic energy (126) measured in real time in a determined position in said space,
- optimising the levels of acoustic energy calculated from the at least one level of measured acoustic energy, so as to reduce the error between the level of energy calculated according to any one of the preceding claims and the level of energy measured.

6. Method for monitoring the acoustic level of a plurality of sources according to any one of the preceding claims, **characterised in that** it consists of:
- performing the stage of modelling the acoustic propagation in real time for each of the sound-emitting sources (14) present in the defined space,
- calculating for the defined space, levels of global acoustic energy from the assembly of models of acoustic propagation obtained in real time for each of the sources.

7. Method for the prediction of the level of global acoustic energy in an aquatic environment **characterised in that** it comprises the following stages:
- a stage of automatically receiving and reading instantaneous information relating to the course and the speed of at least one sound-emitting source,
- a stage of calculating from the information read in the preceding stage of a future position of the said source at a determined moment,
- a stage of implementing the monitoring method according to claim 6 for the calculated future position of the said emitting source in order to obtain a predictive image of the global acoustic levels of energy.

8. Method for reducing sound pollution in an aquatic environment, in particular in a maritime environment, **characterised in that** it consists of
- implementing the method of prediction according to the preceding claim, in order to obtain a predictive image of the levels of global acoustic energy at a determined moment,
- calculating for at least one source the energy radiated for a combination of possible fictitious positions and determining the fictitious position for which the global acoustic energy is minimised at the determined moment,
- transmission of the course and the speed to be maintained at the least one emitting source to achieve the fictitious position determined at the determined moment.

9. Method for monitoring the risk of sound pollution for marine species, **characterised in that** it comprise the following stages:
- implementing the monitoring method according to claim 6 for all of the sound-emitting sources in the space determined in order to obtain an image of the global acoustic levels of energy in real time,
- determining for each depth of the determined area the probability of the presence of marine species,
- calculating the risk of sound pollution for each depth of the determined area.

10. Method for predicting the risk of sound pollution for marine species, **characterised in that** it comprises the following stages:
- implementing the method of prediction according to claim 7 so as to obtain a predictive image of the global levels of acoustic energy,
- determining for each depth of determined space a probability of the presence of marine species,
- calculating the risk of predictive sound pollution for each depth of determined space, at the determined moment.

11. Method for reducing the risk of sound pollution for marine species, **characterised in that** it comprises the following stages:
- implementing the method of prediction according to claim 10 in order to obtain a predictive image of the risks of predictive sound pollution for each depth at a determined moment,
- calculating for at least one source the risk of sound pollution for a combination of possible fictitious positions,
- determining the fictitious position for which the risk of sound pollution is minimised at the determined moment,
- transmission of the course and the speed to be maintained at the said emitting source to achieve the determined fictitious position at the determined moment.
